# EUROPEAN PATENT APPLICATION

(11) **EP 4 429 311 A1**
(43) Date of publication of application: **11.09.2024**
(21) Application number: 22906331.8
(22) Date of filing: 06.12.2022
(51) Int. Cl.: H04W 24/02

(54) **DETECTION METHOD, COMMUNICATION APPARATUS, AND COMMUNICATION SYSTEM**

(30) Priority: 14.12.2021 CN 202111531927
(71) Applicant: Huawei Technologies Co., Ltd., Shenzhen, Guangdong 518129 (CN)
(72) Inventor: HUANG, Kang, Shenzhen, Guangdong 518129 (CN); ZHU, Hualin, Shenzhen, Guangdong 518129 (CN)
(74) Representative: Pfenning, Meinig & Partner mbB
(86) International application number: PCT/CN2022/136920
(87) International publication number: WO 2023/109581

(57) **Abstract**

Embodiments of this application provide a detection method, a communication apparatus, and a communication system. The method includes: when a first detection result of a detected QoS flow meets a first trigger condition, detecting the QoS flow based on a first detection execution action corresponding to the first trigger condition, where the first detection execution action includes a detection frequency; and reporting a second detection result detected based on the first detection execution action. In this solution, a corresponding trigger condition (namely, the first trigger condition) is searched for based on a current detection result (namely, the first detection result), next detection of the QoS flow is performed based on a detection execution action (namely, the first detection execution action) corresponding to the found trigger condition, and a detection result (namely, the second detection result) is reported. Because a detection execution action is determined based on a previous detection result, a detection execution action corresponding to the QoS flow can be accurately determined. This helps improve accuracy of detecting the QoS flow, and flexibly and dynamically detect the QoS flow.

## Description

### CROSS-REFERENCE TO RELATED APPLICATIONS

This application claims priority to Chinese Patent Application No. 202111531927.4, filed with the China National Intellectual Property Administration on December 14, 2021 and entitled "DETECTION METHOD, COMMUNICATION APPARATUS, AND COMMUNICATION SYSTEM", which is incorporated herein by reference in its entirety.

### TECHNICAL FIELD

Embodiments of this application relate to the field of wireless communication technologies, and in particular, to a detection method, a communication apparatus, and a communication system.

### BACKGROUND

For quality of service (quality of service, QoS) flows of some specific services, QoS flow detection may be started, to learn of a real-time status of the QoS flow based on a detection result. Then, a parameter of the QoS flow may be dynamically adjustedbased on the real-time status, to improve user experience and service quality.

However, how to accurately, flexibly, and dynamically detect the QoS flow needs to be resolved.

### SUMMARY

Embodiments of this application provide a detection method, a communication apparatus, and a communication system, to accurately, flexibly, and dynamically detect a QoS flow.

According to a first aspect, an embodiment of this application provides a detection method. The method may be performed by a detection network element or a module (for example, a chip) used in a detection network element. The detection network element may be a user plane function (user plane function, UPF) network element, an access network device, or a packet data network gateway (Packet Data Network Gateway, PGW). Both the UPF network element and the PGW are examples of the user plane network element. The method includes: when a first detection result of a detected quality of service flow meets a first trigger condition, detecting the quality of service flow based on a first detection execution action corresponding to the first trigger condition, where the first detection execution action includes a detection frequency; and reporting a second detection result detected based on the first detection execution action.

According to this solution, the detection network element searches for a corresponding trigger condition (namely, the first trigger condition) based on a current detection result (namely, the first detection result), performs next detection of the quality of service flow based on a detection execution action (namely, the first detection execution action) corresponding to the found trigger condition, and reports a detection result (namely, the second detection result). A detection execution action is determined based on a previous detection result. Therefore, a detection execution action corresponding to the quality of service flow can be accurately determined. Further, this helps improve accuracy of detecting the quality of service flow, and can flexibly and dynamically detect the quality of service flow.

In a possible implementation method, the first detection execution action corresponding to the first trigger condition is obtained from a detection execution rule. The detection execution rule includes at least one trigger condition and a detection execution action corresponding to the at least one trigger condition. The at least one trigger condition includes the first trigger condition. The detection execution action corresponding to the at least one trigger condition includes the first detection execution action.

According to the foregoing solution, the detection execution rule can be provided in advance. The detection execution rule includes the at least one trigger condition and the detection execution action corresponding to the at least one trigger condition. In this way, the corresponding detection execution action can be selected based on the trigger condition matching the first detection result, to flexibly and dynamically adjust the detection execution action. This helps improve accuracy of a detection result.

In a possible implementation method, a default detection execution action in the detection execution rule is selected when the first detection result does not meet any trigger condition in the at least one trigger condition. The quality of service flow is detected based on the default detection execution action.

According to the foregoing solution, a default detection execution action is provided in the detection execution rule. This can ensure that a detection execution action is selected, thereby improving detection efficiency.

In a possible implementation method, the detection execution rule is received from a session management network element or a policy control network element. Alternatively, the detection execution rule is obtained locally.

In a possible implementation method, the second detection result is reported when a detection reporting condition is met. That the detection reporting condition is met includes at least one of the following: a detection reporting frequency; a delay in the second detection result being greater than a delay threshold in the detection reporting condition; a delay jitter in the second detection result being greater than a delay jitter threshold in the detection reporting condition; and a quality of service flow rate in the second detection result being greater than a quality of service flow rate threshold in the detection reporting condition. The detection reporting frequency may be a time lag between two adjacent times of reporting detection results, and the detection reporting frequency may also be referred to as a detection reporting cycle. The delay is a delay between the user plane network element and the access network device, a delay between the user plane network element and a terminal, or an air interface delay between the access network device and a terminal. The delay jitter is a jitter value of the delay between the user plane network element and the access network device, a jitter value of the delay between the user plane network element and the terminal, or a jitter value of the air interface delay between the access network device and the terminal. The quality of service flow rate is a transmission rate of the quality of service flow.

According to the foregoing solution, the detection result is reported only when the detection reporting condition is met, instead of reporting the detection result in real time. This helps reduce power consumption and save a resource.

In a possible implementation method, the detection reporting condition is received from the session management network element or the policy control network element. Alternatively, the detection reporting condition is obtained locally.

In a possible implementation method, a quality of service flow detection function is enabled based on a detection indication.

In a possible implementation method, the detection indication is received from the session management network element or the policy control network element. Alternatively, the detection indication is obtained locally.

In a possible implementation method, the second detection result includes at least one of the following: the delay, the delay jitter, the quality of service flow rate, and information indicating the first detection execution action. The delay is the delay between the user plane network element and the access network device, the delay between the user plane network element and the terminal, or the air interface delay between the access network device and the terminal. The delay jitter is the jitter value of the delay between the user plane network element and the access network device, the jitter value of the delay between the user plane network element and the terminal, or the jitter value of the air interface delay between the access network device and the terminal. The quality of service flow rate is the transmission rate of the quality of service flow.

According to a second aspect, an embodiment of this application provides a detection method. The method may be performed by a network device or a module (for example, a chip) used in a network device. The network device may be a session management network element or a policy control network element. The method includes: When a first detection result of a quality of service flow meets a first trigger condition, the network device selects a first detection execution action corresponding to the first trigger condition. The first detection execution action includes a detection frequency. The network device sends the first detection execution action.

According to this solution, the network device searches for a corresponding trigger condition (namely, the first trigger condition) based on a current detection result (namely, the first detection result), and determines a detection execution action (namely, the first detection execution action) corresponding to the found trigger condition. Then, the network device sends the first detection execution action to a detection network element. In this way, the detection network element performs next detection of the quality of service flow based on the first detection execution action and reports a detection result. A detection execution action is determined based on a previous detection result. Therefore, a detection execution action corresponding to the quality of service flow can be accurately determined. Further, this helps improve accuracy of detecting the quality of service flow, and can flexibly and dynamically detect the quality of service flow.

In a possible implementation method, the network device selects, from a detection execution rule, the first detection execution action corresponding to the first trigger condition. The detection execution rule includes at least one trigger condition and a detection execution action corresponding to the at least one trigger condition. The at least one trigger condition includes the first trigger condition. The detection execution action corresponding to the at least one trigger condition includes the first detection execution action.

According to the foregoing solution, the detection execution rule can be provided in advance. The detection execution rule includes the at least one trigger condition and the detection execution action corresponding to the at least one trigger condition. In this way, the corresponding detection execution action can be selected based on the trigger condition matching the first detection result, to flexibly and dynamically adjust the detection execution action. This helps improve accuracy of a detection result.

In a possible implementation method, the network device selects a default detection execution action in the detection execution rule when the first detection result does not meet any trigger condition in the at least one trigger condition. The network device sends the default detection execution action.

According to the foregoing solution, a default detection execution action is provided in the detection execution rule. This can ensure that a detection execution action can be selected, thereby improving detection efficiency.

In a possible implementation method, the network device is a session management network element. The session management network element receives the detection execution rule from a policy control network element. Alternatively, the session management network element obtains the detection execution rule locally.

In a possible implementation method, the network device is a policy control network element. The policy control network element receives the detection execution rule from an application function network element. Alternatively, the policy control network element obtains the detection execution rule locally.

In a possible implementation method, the network device sends a detection reporting condition, where the detection reporting condition indicates a condition for reporting a detection result; and/or the network device sends a detection indication, where the detection indication indicates to enable a quality of service flow detection function.

In a possible implementation method, the network device receives the second detection result. The second detection result is obtained after the quality of service flow is detected based on the first detection execution action. The network device determines that the second detection result meets a second trigger condition, and selects a second detection execution action corresponding to the second trigger condition. The network device sends the second detection execution action when the second detection execution action is different from the first detection execution action.

The detection execution action can be dynamically updated based on the foregoing solution. This helps improve accuracy of the detection result.

In a possible implementation method, the network device is a session management network element. The session management network element sends the first detection execution action to a user plane network element and/or an access network device.

In a possible implementation method, the network device is a policy control network element. The policy control network element sends the first detection execution action to a user plane network element and/or an access network device via a session management network element.

According to any implementation method of the first aspect or the second aspect, in a possible implementation method, that the first detection result meets the first trigger condition includes at least one of the following: a delay in the first detection result is included in a delay threshold interval in the first trigger condition; a delay jitter in the first detection result is included in a delay jitter threshold interval in the first trigger condition; and a quality of service flow rate in the first detection result is included in a quality of service flow rate threshold interval in the first trigger condition. The delay is the delay between the user plane network element and the access network device, the delay between the user plane network element and the terminal, or the air interface delay between the access network device and the terminal. The delay jitter is the jitter value of the delay between the user plane network element and the access network device, the jitter value of the delay between the user plane network element and the terminal, or the jitter value of the air interface delay between the access network device and the terminal. The quality of service flow rate is the transmission rate of the quality of service flow.

In a possible implementation method, the first detection execution action further includes a detected data amount. The detected data amount indicates a quantity of data packets detected at a time.

According to a third aspect, an embodiment of this application provides a communication apparatus. The apparatus may be a detection network element, or may be a module (for example, a chip) used in a detection network element. The apparatus has a function of implementing any implementation method of the first aspect. The function may be implemented by hardware, or may be implemented by hardware executing corresponding software. The hardware or the software includes one or more modules corresponding to the function.

According to a fourth aspect, an embodiment of this application provides a communication apparatus. The apparatus may be a network device, or may be a module (for example, a chip) used in a network device. The apparatus has a function of implementing any implementation method of the second aspect. The function may be implemented by hardware, or may be implemented by hardware executing corresponding software. The hardware or the software includes one or more modules corresponding to the function.

According to a fifth aspect, an embodiment of this application provides a communication apparatus, including a processor and a memory. The memory is configured to store computer instructions. When the apparatus runs, the processor executes the computer instructions stored in the memory, to enable the apparatus to perform any implementation method of the first aspect and the second aspect.

According to a sixth aspect, an embodiment of this application provides a communication apparatus, including a unit or means (means) configured to perform steps of any implementation method of the first aspect and the second aspect.

According to a seventh aspect, an embodiment of this application provides a communication apparatus, including a processor and an interface circuit. The processor is configured to: communicate with another apparatus through the interface circuit, and perform any implementation method of the first aspect and the second aspect. There are one or more processors.

According to an eighth aspect, an embodiment of this application provides a communication apparatus, including a processor coupled to a memory. The processor is configured to invoke a program stored in the memory, to perform any implementation method of the first aspect and the second aspect. The memory may be located inside or outside the apparatus. In addition, there may be one or more processors.

According to a ninth aspect, an embodiment of this application further provides a computer-readable storage medium. The computer-readable storage medium stores a computer program or instructions. When the computer program or the instructions are run on a communication apparatus, any implementation method of the first aspect and the second aspect is performed.

According to a tenth aspect, an embodiment of this application further provides a computer program product. The computer program product includes a computer program or instructions. When the computer program or the instructions are run by a communication apparatus, any implementation method of the first aspect and the second aspect is performed.

According to an eleventh aspect, an embodiment of this application further provides a chip system, including a processor, configured to perform any implementation method of the first aspect and the second aspect.

According to a twelfth aspect, an embodiment of this application further provides a communication system, including a detection network element configured to perform any implementation method of the first aspect, and a network device configured to receive a second detection result from the detection network element.

In a possible implementation method, the network device is further configured to send the second detection result to an application function network element. The system further includes the application function network element. The application function network element is configured to generate a detection policy based on the second detection result. The detection policy includes at least one of a detection execution rule, a detection reporting condition, or a detection indication. The detection execution rule includes at least one trigger condition and a detection execution action corresponding to the at least one trigger condition. The detection reporting condition indicates a condition for reporting a detection result. The detection indication indicates to enable a quality of service flow detection function.

According to a thirteenth aspect, an embodiment of this application further provides a communication system, including a network device configured to perform any implementation method of the second aspect, and a detection network element configured to receive a first detection execution action from the network device.

### BRIEF DESCRIPTION OF DRAWINGS

FIG. 1 is a diagram of a communication system according to an embodiment of this application;
FIG. 2(a) is a diagram of a 5G network architecture based on a service-based architecture;
FIG. 2(b) is a diagram of a 5G network architecture based on a point-to-point interface;
FIG. 3 is a schematic flowchart of a detection method according to an embodiment of this application;
FIG. 4 is a schematic flowchart of a detection method according to an embodiment of this application;
FIG. 5 is a schematic flowchart of a detection method according to an embodiment of this application;
FIG. 6 is a schematic flowchart of a detection method according to an embodiment of this application;
FIG. 7 is a schematic flowchart of a detection method according to an embodiment of this application;
FIG. 8 is a schematic flowchart of a detection method according to an embodiment of this application;
FIG. 9 is a schematic flowchart of a QoS flow detection method according to an embodiment of this application;
FIG. 10 is a diagram of a communication apparatus according to an embodiment of this application; and
FIG. 11 is a diagram of a communication apparatus according to an embodiment of this application.

### DESCRIPTION OF EMBODIMENTS

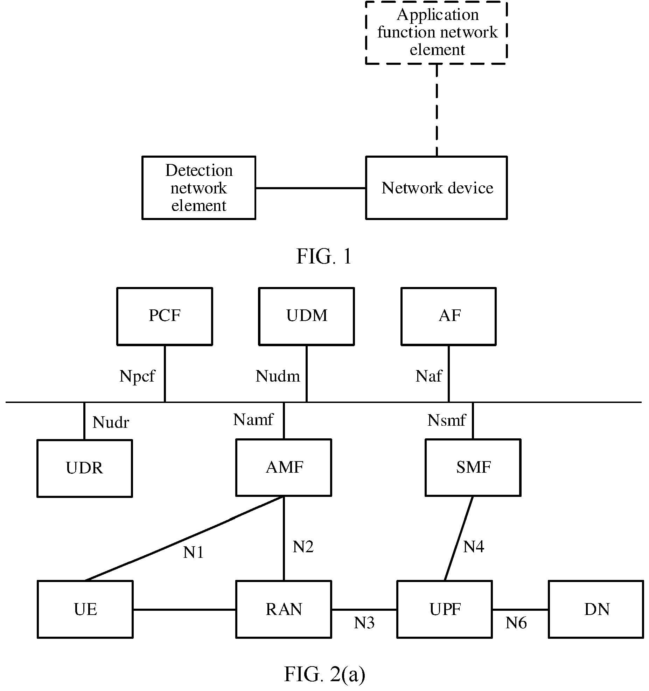

FIG. 1 shows a communication system according to this application. The communication system includes a detection network element and a network device. Optionally, the communication system further includes an application function network element.

In a first embodiment, the detection network element is configured to: when a first detection result of a detected quality of service flow meets a first trigger condition, detect the quality of service flow based on a first detection execution action corresponding to the first trigger condition, where the first detection execution action includes a detection frequency; and report, to the network device, a second detection result detected based on the first detection execution action. The network device is configured to receive the second detection result from the detection network element.

In a possible implementation method, the detection network element is further configured to obtain, from a detection execution rule, the first detection execution action corresponding to the first trigger condition. The detection execution rule includes at least one trigger condition and a detection execution action corresponding to the at least one trigger condition. The at least one trigger condition includes the first trigger condition. The detection execution action corresponding to the at least one trigger condition includes the first detection execution action.

In a possible implementation method, the detection network element is further configured to: select a default detection execution action in the detection execution rule when the first detection result does not meet any trigger condition in the at least one trigger condition; and detect the quality of service flow based on the default detection execution action.

In a possible implementation method, the detection network element is further configured to: receive the detection execution rule from a session management network element; receive the detection execution rule from a policy control network element via a session management network element; or obtain the detection execution rule locally.

In a possible implementation method, the detection network element is configured to report, to the network device, a second detection result detected based on the first detection execution action.

In a possible implementation method, the detection network element is a user plane network element. That the detection network element is configured to report, to the network device, the second detection result detected based on the first detection execution action specifically includes: sending the second detection result to the session management network element.

In a possible implementation method, the detection network element is an access network device. That the detection network element is configured to report, to the network device, the second detection result detected based on the first detection execution action specifically includes: sending the second detection result to the session management network element via a mobility management network element.

In a possible implementation method, the detection network element is further configured to receive a detection reporting condition from the session management network element or the policy control network element, or obtain the detection reporting condition locally. That the detection network element is configured to receive the detection reporting condition from the policy control network element may be: receiving the detection reporting condition sent by the policy control network element via the session management network element.

In a possible implementation method, the detection network element is further configured to enable a quality of service flow detection function based on a detection indication.

In a possible implementation method, the detection network element is further configured to receive the detection indication from the session management network element or the policy control network element, or obtain the detection indication locally.

In a possible implementation method, the network device is further configured to send the second detection result to the application function network element. The application function network element is configured to generate a detection policy based on the second detection result. The detection policy includes the at least one of the detection execution rule, the detection reporting condition, or the detection indication. The detection execution rule includes the at least one trigger condition and the detection execution action corresponding to the at least one trigger condition. The detection reporting condition indicates a condition for reporting a detection result. The detection indication indicates to enable the quality of service flow detection function.

In a second embodiment, the network device is configured to: when a first detection result of a quality of service flow meets a first trigger condition, select a first detection execution action corresponding to the first trigger condition, where the first detection execution action includes a detection frequency; and send the first detection execution action to the detection network element. The detection network element is configured to receive the first detection execution action from the network device.

In a possible implementation method, the detection network element is further configured to: detect the quality of service flow based on the first detection execution action; and report a second detection result detected based on the first detection execution action.

In a possible implementation method, that the network device is configured to select the first detection execution action corresponding to the first trigger condition specifically includes: selecting, from a detection execution rule, the first detection execution action corresponding to the first trigger condition. The detection execution rule includes at least one trigger condition and a detection execution action corresponding to the at least one trigger condition. The at least one trigger condition includes the first trigger condition. The detection execution action corresponding to the at least one trigger condition includes the first detection execution action.

In a possible implementation method, when the first detection result does not meet any trigger condition in the at least one trigger condition, the network device selects a default detection execution action in the detection execution rule, and sends the default detection execution action.

In a possible implementation method, the network device is a session management network element. The session management network element is further configured to receive the detection execution rule from a policy control network element, or obtain the detection execution rule locally.

In a possible implementation method, the network device is a policy control network element. The policy control network element is further configured to receive the detection execution rule from the application function network element, or obtain the detection execution rule locally.

In a possible implementation method, the network device is further configured to send a detection reporting condition to the detection network element, where the detection reporting condition indicates a condition for reporting a detection result, and/or send a detection indication, where the detection indication indicates to enable a quality of service flow detection function.

In a possible implementation method, the network device is further configured to: receive the second detection result from the detection network element, where the second detection result is obtained after the quality of service flow is detected based on the first detection execution action; determine that the second detection result meets a second trigger condition, and select a second detection execution action corresponding to the second trigger condition; and send the second detection execution action to the detection network element when the second detection execution action is different from the first detection execution action.

In a possible implementation method, the network device is a session management network element. That the network device sends the first detection execution action to the detection network element specifically includes: sending the first detection execution action to a user plane network element and/or an access network device.

In a possible implementation method, the network device is a policy control network element. That the network device sends the first detection execution action to the detection network element specifically includes: sending the first detection execution action to a user plane network element and/or an access network device via a session management network element.

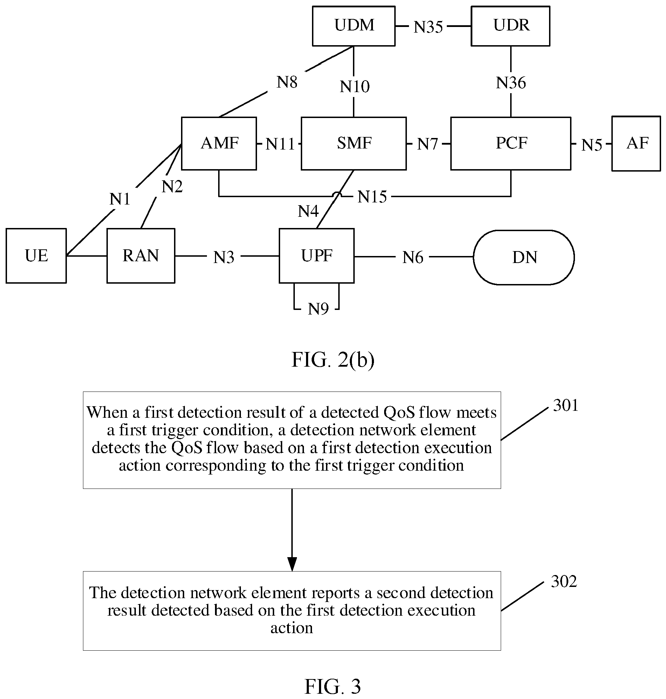

The system shown in FIG. 1 may be used in a 5th generation (5th generation, 5G) network architecture shown in FIG. 2(a) or FIG. 2(b), or certainly may be used in a future network architecture, for example, a 6th generation (6th generation, 6G) network architecture. This is not limited in this application.

FIG. 2(a) is a diagram of the 5G network architecture based on a service-based architecture. The 5G network architecture shown in FIG. 2(a) may include a data network (data network, DN) and an operator network. The following briefly describes functions of some network elements in the 5G network architecture.

The operator network may include one or more of the following network elements: an authentication server function (Authentication Server Function, AUSF) network element (not shown in the figure), a unified data management (unified data management, UDM) network element, a unified data repository (Unified Data Repository, UDR) network element, a network repository function (Network Repository Function, NRF) network element (not shown in the figure), a network exposure function (network exposure function, NEF) network element (not shown in the figure), an application function (application function, AF) network element, a policy control function (policy control function, PCF) network element, an access and mobility management function (access and mobility management function, AMF) network element, a session management function (session management function, SMF) network element, a UPF network element, a binding support function (binding support function, BSF) network element (not shown in the figure), a radio access network (radio access network, RAN) device, and the like. In the operator network, a network element or device other than the radio access network device may be referred to as a core network element or a core network device.

The radio access network device may be a base station (base station), an evolved base station (evolved NodeB, eNodeB), a transmission reception point (transmission reception point, TRP), a next generation base station (next generation NodeB, gNB) in a 5G mobile communication system, a next generation base station in a 6G mobile communication system, a base station in a future mobile communication system, an access node in a wireless fidelity (wireless fidelity, Wi-Fi) system, or the like, or may be a module or a unit that completes some functions of a base station, for example, may be a central unit (central unit, CU), or may be a distributed unit (distributed unit, DU). The radio access network device may be a macro base station, may be a micro base station or an indoor base station, or may be a relay node, a donor node, or the like. A specific technology and a specific device form that are used by the radio access network device are not limited in embodiments of this application. For ease of description, in embodiments of this application, an example in which the base station is used as the radio access network device is used for description.

A terminal communicating with the RAN may also be referred to as a terminal device, user equipment (user equipment, UE), a mobile station, a mobile terminal, or the like. The terminal may be widely used in various scenarios, for example, device-to-device (device-to-device, D2D) communication, vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart furniture, intelligent office, intelligent wear, intelligent transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal are not limited in embodiments of this application.

The base station and the terminal may be fixed or movable. The base station and the terminal may be deployed on land, including indoor, outdoor, handheld, or vehicle-mounted deployment, may be deployed on a water surface, or may be deployed on an airplane, a balloon, or an artificial satellite in the air. Application scenarios of the base station and the terminal are not limited in embodiments of this application.

The AMF network element includes functions such as performing of mobility management, and access authentication/authorization. In addition, the AMF network element is further responsible for transferring a user policy between the terminal and the PCF.

The SMF network element includes functions such as performing of session management, execution of a control policy delivered by the PCF, UPF selection, and internet protocol (internet protocol, IP) address allocation of the terminal.

The UPF network element is used as an interface UPF to the data network, and includes functions such as completion of user plane data forwarding, session/flow level based charging statistics collection, and bandwidth limitation.

The UDM network element includes functions such as performing of subscription data management, and user access authorization.

The UDR includes functions of access of data of types such as subscription data, policy data, and application data.

The NEF network element is configured to support exposure of a capability and an event.

The AF network element transfers a requirement of an application side on a network side, for example, a QoS requirement or user status event subscription. The AF may be a third-party functional entity, or may be an operator-deployed application service, for example, an IP multimedia subsystem (IP Multimedia Subsystem, IMS) voice call service.

The PCF network element includes policy control functions such as being responsible for charging at a session or service flow level, QoS bandwidth assurance and mobility management, and terminal policy decision. The PCF network element includes an AM PCF network element and a session management policy control function (session management PCF, SM PCF) network element. The AM PCF network element may provide a mobility management policy. The SM PCF network element may provide a session management policy.

The NRF network element may be configured to: provide a network element discovery function, and provide, based on a request of another network element, network element information corresponding to a network element type. The NRF further provides a network element management service, for example, network element registration, update, or deregistration, and network element status subscription and push.

The BSF network element provides functions such as registration, deregistration, and update of a BSF service, NRF connection detection, session binding information creation, UE information obtaining, and session binding information query for duplicate IP addresses.

The AUSF network element is responsible for performing authentication on a user, to determine whether the user or a device is allowed to access the network.

The DN is a network located outside the operator network. A plurality of DNs may access the operator network, and a plurality of services may be deployed on the DN, to provide services such as data and/or voice and the like for a terminal. For example, the DN is a private network of an intelligent factory, a sensor installed in a workshop of the intelligent factory may be the terminal, a control server of the sensor is deployed in the DN, and the control server can provide a service for the sensor. The sensor may communicate with the control server, to obtain instructions of the control server, transmit collected sensor data to the control server according to the instructions, and the like. For another example, the DN is an internal office network of a company, a mobile phone or a computer of an employee in the company may be the terminal, and the mobile phone or the computer of the employee can access information, a data resource, or the like on the internal office network of the company.

Npcf, Nufr, Nudm, Naf, Namf, and Nsmf in FIG. 2(a) are respectively service-based interfaces provided by the PCF network element, the UDR network element, the UDM network element, the AF network element, the AMF network element, and the SMF network element, and are for invoking corresponding service-based operations. N1, N2, N3, N4, and N6 are interface sequence numbers. These interface sequence numbers have the following meanings.

(1) N1 represents an interface between the AMF network element and the UE, which may be for transmitting non-access stratum (non-access stratum, NAS) signaling (for example, including a QoS rule from the AMF network element) to the UE, and the like.

(2) N2 represents an interface between the AMF network element and the radio access network device, which may be for transmitting radio bearer control information from a core network side to the radio access network device, and the like.

(3) N3 represents an interface between the radio access network device and the UPF network element, which is mainly for transmitting uplink user plane data and/or downlink user plane data between the radio access network device and the UPF network element.

(4) N4 represents an interface between the SMF network element and the UPF network element, which may be for transmitting information between a control plane and a user plane, including delivery of a forwarding rule, a QoS rule, a traffic statistics collection rule, and the like from the control plane to the user plane and reporting of information on the user plane.

(5) N6 represents an interface between the UPF network element and the DN, which is for transmitting an uplink user data flow and/or a downlink user data flow between the UPF network element and the DN.

FIG. 2(b) is a diagram of a 5G network architecture based on a point-to-point interface. For descriptions of a function of a network element in the 5G network architecture, refer to descriptions of a function of a corresponding network element in FIG. 2(a). Details are not described again. A main difference between FIG. 2(b) and FIG. 2(a) lies in that an interface between control plane network elements in FIG. 2(a) is a service-based interface, and an interface between control plane network elements in FIG. 2(b) is a point-to-point interface.

In the architecture shown in FIG. 2(b), names and functions of interfaces between the network elements are as follows.
(1) For meanings of N1, N2, N3, N4, and N6 interfaces, refer to the foregoing descriptions.
(2) N5 represents an interface between an AF network element and a PCF network element, which may be configured to deliver an application service request and report a network event.
(3) N7 represents an interface between the PCF network element and an SMF network element, which may be configured to deliver a protocol data unit (protocol data unit, PDU) session granularity control policy and a service data flow granularity control policy.
(4) N8 represents an interface between an AMF network element and a UDM network element, which may be used by the AMF network element to obtain, from the UDM network element, subscription data and authentication data that are related to access and mobility management, and used by the AMF network element to register, with the UDM network element, information related to mobility management of a terminal device, and the like.
(5) N9 represents a user plane interface between a UPF network element and a UPF network element, which is configured to transmit an uplink user data flow and/or a downlink user data flow between the UPF network elements.
(6) N10 represents an interface between the SMF network element and the UDM network element, which may be used by the SMF network element to obtain, from the UDM network element, subscription data related to session management, and used by the SMF network element to register, with the UDM network element, information related to a session of the terminal device, and the like.
(7) N11 represents an interface between the SMF network element and the AMF network element, which may be configured to: transmit PDU session tunnel information between a radio access network device and the UPF network element, transmit a control message sent to the terminal device, and transmit radio resource control information sent to the radio access network device, and the like.
(8) N15 represents an interface between the PCF network element and the AMF network element, which may be configured to deliver a terminal policy and an access control-related policy.
(9) N35 represents an interface between the UDM network element and a UDR network element, which may be used by the UDM network element to obtain user subscription data information from the UDR network element.
(10) N36 represents an interface between the PCF network element and the UDR network element, which may be used by the PCF network element to obtain, from the UDR network element, policy-related subscription data and application data-related information.

It may be understood that the foregoing network element or function may be a network component in a hardware device, a software function run on dedicated hardware, or a virtualized function instantiated on a platform (for example, a cloud platform). Optionally, the foregoing network element or function may be implemented by one device, may be jointly implemented by a plurality of devices, or may be a functional module in one device. This is not specifically limited in embodiments of this application.

The session management network element, the policy control network element, the application function network element, and the mobility management network element in embodiments of this application may be respectively an SMF network element, a PCF network element, an AF network element, and an AMF network element in a 5G system, or may be network elements that have functions of the SMF network element, the PCF network element, the AF network element, and the AMF network element in a future communication network like a 6G network. This is not limited in this application. In embodiments of this application, an example in which the SMF network element, the PCF network element, the AF network element, and the AMF network element are respectively the session management network element, the policy control network element, the application function network element, and the mobility management network element is used for description. In addition, the SMF network element, the PCF network element, the AF network element, and the AMF network element are respectively referred to as an SMF, a PCF, an AF, and an AMF for short.

The access network device in embodiments of this application may be a radio access network device (for example, a base station) or a wired access network device in 5G or future communication. For ease of description, in embodiments of this application, an example in which the base station is used as the access network device is used for description.

FIG. 3 is a schematic flowchart of a detection method according to an embodiment of this application. The method includes the following steps.

Step 301: When a first detection result of a detected quality of service flow (QoS flow) meets a first trigger condition, a detection network element detects the QoS flow based on a first detection execution action corresponding to the first trigger condition. The first detection execution action includes a detection frequency. The detection frequency indicates a quantity of times of detection in a unit time.

The first detection result may also be referred to as a historical detection result, a current detection result, or a previous detection result, for example, is a latest detection result, or an average value of latest N detection results, where N is an integer greater than or equal to 1.

The detection network element may be a PGW, a base station, a UPF, or the like.

Step 302: The detection network element reports a second detection result detected based on the first detection execution action.

In an implementation method, before step 301, the detection network element further enables a QoS flow detection function based on a detection indication. The detection network element may receive the detection indication from an SMF or a PCF. Alternatively, the detection network element obtains the detection indication locally. For example, the detection indication is configured on the detection network element by an administrator via a network management device.

According to this solution, the detection network element matches a corresponding trigger condition (namely, the first trigger condition) based on the current detection result (namely, the first detection result), performs next detection of the QoS flow based on a detection execution action (namely, the first detection execution action) corresponding to the matched trigger condition, and reports a detection result (namely, the second detection result). Because a detection execution action is determined based on a previous detection result, a detection execution action corresponding to the QoS flow can be accurately determined. This helps improve accuracy of detecting the QoS flow, and can flexibly and dynamically detect the QoS flow.

In an implementation method, the detection network element in step 301 and step 302 is a UPF. In this case, in step 302, the UPF may report the second detection result to the SMF. Optionally, the SMF may report the second detection result to the PCF.

In an implementation method, the detection network element in step 301 and step 302 is a base station. In this case, in step 302, the base station may report the second detection result to the SMF via an AMF, or the base station reports the second detection result to another base station. Optionally, the SMF may report the second detection result to the PCF.

In an implementation method, the detection network element in step 301 and step 302 is a PGW. In this case, in step 302, the PGW may report the second detection result to the SMF or a mobility management entity (mobility management entity, MME). Optionally, the SMF may report the second detection result to the PCF.

In an implementation method, the detection network element may obtain, from a detection execution rule, the first detection execution action corresponding to the first trigger condition. The detection execution rule includes at least one trigger condition and a detection execution action corresponding to the at least one trigger condition. The at least one trigger condition includes the first trigger condition. The detection execution action corresponding to the at least one trigger condition includes the first detection execution action. For example, Table 1 is an example of the detection execution rule.

**Table 1**

| Serial number | Trigger condition | Detection execution action |
|---|---|---|
| 1 | / | Default detection execution action |
| 2 | Trigger condition 1 | Detection execution action 1 |
| 3 | Trigger condition 2 | Detection execution action 2 |
| 4 | Trigger condition 3 | Detection execution action 3 |
| 5 | Trigger condition 4 | Detection execution action 4 |
| 6 | Trigger condition 5 | Detection execution action 5 |
| ... | ... | ... |

For example, in step 301, if determining that the first detection result meets the trigger condition 1, the detection network element detects the QoS flow based on the detection execution action 1 corresponding to the trigger condition 1. In this case, the trigger condition 1 is the first trigger condition, and the detection execution action 1 is the first detection execution action. For another example, in step 301, if determining that the first detection result meets the trigger condition 2, the detection network element detects the QoS flow based on the detection execution action 2 corresponding to the trigger condition 2. In this case, the trigger condition 2 is the first trigger condition, and the detection execution action 2 is the first detection execution action.

If the first detection result does not meet any trigger condition in the at least one trigger condition in the detection execution rule, step 301 may be replaced with the following: The detection network element selects the default detection execution action in the detection execution rule, and detects the QoS flow based on the default detection execution action, to obtain the second detection result.

Alternatively, for a case in which the detection network element performs detection on the QoS flow for the first time, the detection network element cannot obtain the first detection result. In this case, step 301 may be replaced with the following: The detection network element selects the default detection execution action in the detection execution rule, and detects the QoS flow based on the default detection execution action, to obtain the second detection result.

In an implementation method, the detection network element may receive the detection execution rule from the SMF or the PCF. Alternatively, the detection network element obtains the detection execution rule locally. For example, the detection execution rule is configured on the detection network element by an administrator via a network management device.

In an implementation method, the trigger condition in the detection execution rule includes one or more of a delay threshold interval, a delay jitter threshold interval, and a QoS flow rate threshold interval. The detection execution action includes a detection frequency, or includes a detection frequency and a detected data amount. The detected data amount indicates a quantity of data packets detected at a time.

A detection result (for example, the first detection result or the second detection result) detected by the detection network element includes one or more of a delay, a delay jitter, or a QoS flow rate. Optionally, the detection result further includes information indicating the detection execution action. For example, if the second detection result is obtained after the detection network element detects the QoS flow based on the first detection execution action, the second detection result may include information indicating the first detection execution action.

The delay may be a delay between the UPF (or the PGW) and the base station, a delay between the UPF (or the PGW) and a terminal, or an air interface delay between the base station and a terminal. For example, the delay is the delay between the UPF (or the PGW) and the base station. The delay may be an average value of a plurality of delays between the UPF (or the PGW) and the base station, or a delay that is measured last time and that is between the UPF (or the PGW) and the base station.

The delay jitter is a jitter value of the delay between the UPF (or the PGW) and the base station, a jitter value of the delay between the UPF (or the PGW) and the terminal, or a jitter value of the air interface delay between the base station and the terminal. For example, the delay jitter is the jitter value of the delay between the UPF (or the PGW) and the base station. The delay jitter may be an average value of a plurality of jitter values of the delay between the UPF (or the PGW) and the base station, or a jitter value that is last measured and that is of the delay between the UPF (or the PGW) and the base station. The jitter value may be a difference between delays measured last two times, or a difference between a current delay and an average value of historical N delays, where N is an integer greater than 1.

The QoS flow rate is a transmission rate of the QoS flow. For example, the detection network element determines the transmission rate of the QoS flow based on a quantity of data packets received or sent in a unit time.

The following describes Table 1 in detail by using an example in which the trigger condition includes the delay threshold interval, the delay jitter threshold interval, and the QoS flow rate threshold interval and the detection execution action includes the detection frequency and the detected data amount. The following Table 2 is a specific example of Table 1.

**Table 2**

| Serial number | Trigger condition | | | Detection execution action | | Note |
|---|---|---|---|---|---|---|
| | Delay threshold interval (millisecond) | Delay jitter threshold interval (millisecond) | QoS flow rate threshold interval (data packets/millisecond) | Detection frequency (times/second) | Detected data amount (data packets/time) | |
| 1 | / | / | / | 100 | 1 | Default detection execution action |
| 2 | (0, 10] | (0, 5] | (0, 50] | 20 | 2 | Trigger condition 1 and detection execution action 1 |
| 3 | (0, 10] | (0, 5] | (50, +∞) | 20 | 1 | Trigger condition 2 and detection execution action 2 |
| 4 | (0, 10] | (5, +∞) | (0, 50] | 30 | 2 | Trigger condition 3 and detection execution action 3 |
| 5 | (0, 10] | (5, +∞) | (50, +∞) | 30 | 1 | Trigger condition 4 and detection execution action 4 |
| 6 | (10, 20] | (0, 10] | (0, 100] | 40 | 2 | Trigger condition 5 and detection execution action 5 |
| ... | ... | ... | ... | ... | ... | |

Refer to Table 2. The trigger condition 1 includes: A delay threshold interval is (0, 10], a delay jitter threshold interval is (0, 5], and a QoS flow rate threshold interval is (0, 50]. The detection execution action 1 corresponding to the trigger condition 1 includes: A detection frequency is 20 times/second, and a detected data amount is two data packets/time, that is, detection is performed 20 times per second and two data packets are detected each time, which is equivalent to detecting 40 data packets per second. Herein, (a, b] in Table 2 indicates being greater than a and less than or equal to b. For example, (0, 10] indicates being greater than 0 and less than or equal to 10. Herein, (a, +∞) in Table 2 indicates being greater than a. For example, (5, +∞) indicates being greater than 5.

The detection execution rule in Table 2 further includes the default detection execution action. The default detection execution action includes: A detection frequency is 100 times/second and a detected data amount is one data packet/time, that is, detection is performed for 100 times per second and one data packet is detected each time.

The following describes the solution of step 301 and step 302 with reference to the example of Table 2.

For example, if the detection network element performs detection on a QoS flow for the first time, the detection network element selects, from the detection execution rule in Table 2, the default detection execution action, which includes: The detection frequency is 100 times/second and the detected data amount is one data packet/time; and then detects the QoS flow based on the default detection execution action, to obtain a second detection result, and reports the second detection result.

For another example, the detection network element performs detection on a QoS flow not for the first time, and may obtain a first detection result before current detection. The first detection result includes one or more of a delay, a delay jitter, and a QoS flow rate. If determining that the first detection result meets the first trigger condition, the detection network element selects the first detection execution action corresponding to the first trigger condition. That the first detection result meets the first trigger condition includes at least one of the following: a delay in the first detection result is included in a delay threshold interval in the first trigger condition, a delay jitter in the first detection result is included in a delay jitter threshold interval in the first trigger condition, and a QoS flow rate in the first detection result is included in a QoS flow rate threshold interval in the first trigger condition. For example, the first detection result includes the delay, the delay jitter, and the QoS flow rate. In addition, the delay is 5 milliseconds, the delay jitter is 2 milliseconds, and the QoS flow rate is 10 data packets/millisecond. The first detection result meets the trigger condition 1 (also referred to as the first trigger condition) in Table 2. In this case, the detection network element selects the detection execution action 1 (also referred to as the first detection execution action), where that is, the detection frequency is 20 times/second, and the detected data amount is two data packets/time; and detects the QoS flow based on the detection execution action 1, to obtain a second detection result. The second detection result includes one or more of a delay, a delay jitter, or a QoS flow rate. Optionally, the second detection result further includes information indicating the detection execution action 1.

In an implementation method, step 302 may be specifically: When a detection reporting condition is met, the detection network element reports the second detection result detected based on the first detection execution action. That the detection reporting condition is met includes at least one of the following: a detection reporting frequency; a delay in the second detection result being greater than a delay threshold in the detection reporting condition, a delay jitter in the second detection result being greater than a delay jitter threshold in the detection reporting condition, and a QoS flow rate in the second detection result being greater than a QoS flow rate threshold in the detection reporting condition. The detection reporting frequency may be a time lag between two adjacent times of reporting detection results, and the detection reporting frequency may also be referred to as a detection reporting cycle. The detection network element may receive the detection reporting condition from the SMF or the PCF. Alternatively, the detection network element obtains the detection reporting condition locally. For example, the detection reporting condition is configured on the detection network element by an administrator via a network management device.

In the embodiment corresponding to FIG. 3, the detection network element determines the detection execution action used when the QoS flow is detected. The following describes another detection method. In the detection method, a network device (for example, an SMF or a PCF) determines a detection execution action used when a QoS flow is detected, and sends the determined detection execution action to a detection network element, and the detection network element detects the QoS flow based on the detection execution action.

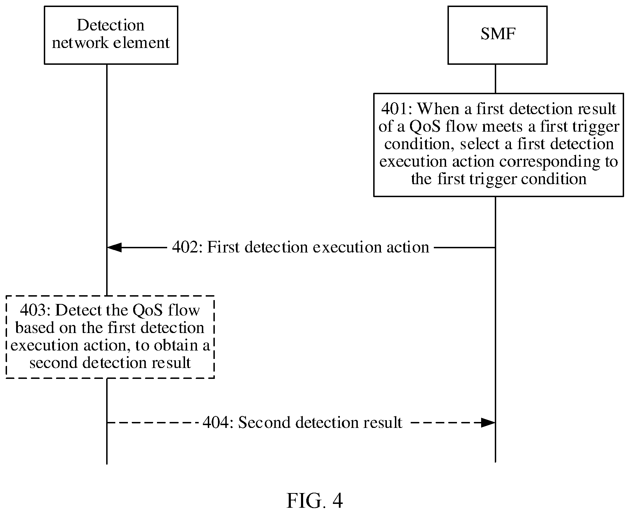

FIG. 4 is a schematic flowchart of a detection method according to an embodiment of this application. The method includes the following steps.

Step 401: When a first detection result of a QoS flow meets a first trigger condition, an SMF selects a first detection execution action corresponding to the first trigger condition, where the first detection execution action includes a detection frequency.

Step 402: The SMF sends the first detection execution action to a detection network element. Correspondingly, the detection network element receives the first detection execution action.

Optionally, after step 402, the method further includes the following step 403 and step 404.

Step 403: The detection network element detects the QoS flow based on the first detection execution action, to obtain a second detection result.

Step 404: The detection network element reports the second detection result to the SMF. Correspondingly, the SMF receives the second detection result.

According to this solution, the SMF searches for a corresponding trigger condition (namely, the first trigger condition) based on a current detection result (namely, the first detection result), and determines a detection execution action (namely, the first detection execution action) corresponding to the found trigger condition. Then, the SMF sends the first detection execution action to the detection network element. The detection network element performs next detection of the QoS flow based on the first detection execution action and reports a detection result (namely, the second detection result). Because a detection execution action is determined based on a previous detection result, a detection execution action corresponding to the QoS flow can be accurately determined. This helps improve accuracy of detecting the QoS flow, and can flexibly and dynamically detect the QoS flow.

For specific meanings of the detection network element, the first detection result, the second detection result, the first trigger condition, the first detection execution action, and the first detection result meeting the first trigger condition, refer to the descriptions in the embodiment corresponding to FIG. 3. Details are not described herein again. Different from that in the embodiment corresponding to FIG. 3, in the embodiment corresponding to FIG. 4, the SMF determines the first detection execution action and sends the first detection execution action to the detection network element, but in the embodiment corresponding to FIG. 3, the detection network element determines the first detection execution action.

In an implementation method, the SMF may select, from a detection execution rule, the first detection execution action corresponding to the first trigger condition. For a meaning and an example of the detection execution rule and a specific implementation method for selecting, from the detection execution rule, the first detection execution action corresponding to the first trigger condition, refer to related descriptions in the embodiment corresponding to FIG. 3. Details are not described again. Optionally, the SMF receives the detection execution rule from the PCF, or the SMF obtains the detection execution rule locally. For example, the detection execution rule is configured on the SMF by an administrator via a network management device.

In an implementation method, if the first detection result does not meet any trigger condition in at least one trigger condition in the detection execution rule, step 401 to step 403 may be replaced with the following: The SMF selects a default detection execution action in the detection execution rule, the SMF sends the default detection execution action to the detection network element, and the detection network element detects the QoS flow based on the default detection execution action, to obtain the second detection result.

Alternatively, for a case in which the detection network element performs detection on the QoS flow for the first time, the SMF cannot obtain the first detection result. In this case, step 401 to step 403 may be replaced with the following: The SMF selects a default detection execution action in the detection execution rule, the SMF sends the default detection execution action to the detection network element, and the detection network element detects the QoS flow based on the default detection execution action, to obtain the second detection result.

In an implementation method, before step 403, the SMF further sends a detection indication to the detection network element. The detection indication indicates to enable a QoS flow detection function. The detection network element enables the QoS flow detection function of the detection network element based on the detection indication.

In an implementation method, before step 404, the SMF further sends a detection reporting condition to the detection network element. The detection reporting condition indicates a condition for reporting a detection result. In this case, step 404 is specifically: The detection network element sends the second detection result to the SMF based on the detection reporting condition. For a specific implementation of the detection reporting condition, refer to related descriptions in the embodiment corresponding to FIG. 3.

In an implementation method, after step 404, the SMF determines that the second detection result meets a second trigger condition, and selects a second detection execution action corresponding to the second trigger condition. The SMF determines whether the second detection execution action is the same as the first detection execution action. When the second detection execution action is different from the first detection execution action, the SMF sends the second detection execution action to the detection network element. In this way, the detection network element detects the QoS flow based on the second detection execution action and reports a corresponding detection result. For the implementation method, in a specific implementation, for example, an application scenario is as follows: At intervals of a piece of duration, the SMF selects a detection execution action once based on a trigger condition that a detection result meets, and sends the detection execution action to the detection network element. The detection network element detects the QoS flow based on the detection execution action and reports a detection result within the period of time. The SMF determines, based on the detection result, whether the detection execution action needs to be updated. If the detection execution action needs to be updated, the SMF notifies the detection network element to update the detection execution action. Subsequently, within a next piece of duration, the SMF selects a detection execution action once based on a trigger condition that the detection result meets, and sends the detection execution action to the detection network element, and so on.

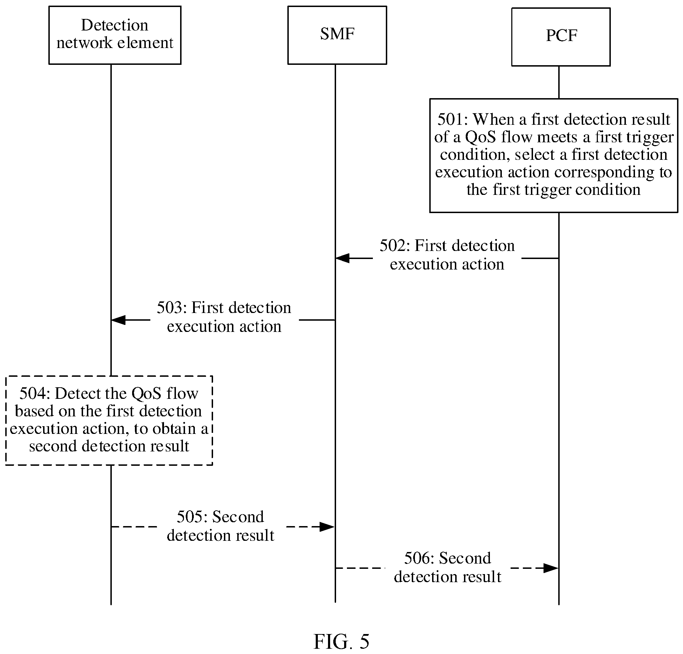

FIG. 5 is a schematic flowchart of a detection method according to an embodiment of this application. The method includes the following steps.

Step 501: When a first detection result of a QoS flow meets a first trigger condition, a PCF selects a first detection execution action corresponding to the first trigger condition, where the first detection execution action includes a detection frequency.

Step 502: The PCF sends the first detection execution action to an SMF. Correspondingly, the SMF receives the first detection execution action.

Step 503: The SMF sends the first detection execution action to a detection network element. Correspondingly, the detection network element receives the first detection execution action.

Optionally, after step 503, the method further includes the following step 504 to step 506.

Step 504: The detection network element detects the QoS flow based on the first detection execution action, to obtain a second detection result.

Step 505: The detection network element reports the second detection result to the SMF. Correspondingly, the SMF receives the second detection result.

Step 506: The SMF reports the second detection result to the PCF. Correspondingly, the PCF receives the second detection result.

According to this solution, the PCF searches for a corresponding trigger condition (namely, the first trigger condition) based on a current detection result (namely, the first detection result), and determines a detection execution action (namely, the first detection execution action) corresponding to the found trigger condition. Then, the PCF sends the first detection execution action to the detection network element via the SMF. The detection network element performs next detection of the QoS flow based on the first detection execution action and reports a detection result (namely, the second detection result). Because a detection execution action is determined based on a previous detection result, a detection execution action corresponding to the QoS flow can be accurately determined. This helps improve accuracy of detecting the QoS flow, and can flexibly and dynamically detect the QoS flow.

For specific meanings of the detection network element, the first detection result, the second detection result, the first trigger condition, the first detection execution action, and the first detection result meeting the first trigger condition, refer to the descriptions in the embodiment corresponding to FIG. 3. Details are not described herein again. Different from that in the embodiment corresponding to FIG. 3, in the embodiment corresponding to FIG. 5, the PCF determines the first detection execution action and sends the first detection execution action to the detection network element via the SMF, but in the embodiment corresponding to FIG. 3, the detection network element determines the first detection execution action.

In an implementation method, the PCF may select, from a detection execution rule, the first detection execution action corresponding to the first trigger condition. For a meaning and an example of the detection execution rule and a specific implementation method for selecting, from the detection execution rule, the first detection execution action corresponding to the first trigger condition, refer to related descriptions in the embodiment corresponding to FIG. 3. Details are not described again. Optionally, the PCF receives the detection execution rule from an AF, or the PCF obtains the detection execution rule locally. For example, the detection execution rule is configured on the PCF by an administrator via a network management device.

In an implementation method, if the first detection result does not meet any trigger condition in at least one trigger condition in the detection execution rule, step 501 to step 504 may be replaced with the following: The PCF selects a default detection execution action in the detection execution rule, the PCF sends the default detection execution action to the detection network element via the SMF, and the detection network element detects the QoS flow based on the default detection execution action, to obtain the second detection result.

Alternatively, for a case in which the detection network element performs detection on the QoS flow for the first time, the PCF cannot obtain the first detection result. In this case, step 501 to step 504 may be replaced with the following: The PCF selects a default detection execution action in the detection execution rule, the PCF sends the default detection execution action to the detection network element via the SMF, and the detection network element detects the QoS flow based on the default detection execution action, to obtain the second detection result.

In an implementation method, before step 504, the PCF further sends a detection indication to the detection network element via the SMF. The detection indication indicates to enable a QoS flow detection function. The detection network element enables the QoS flow detection function of the detection network element based on the detection indication.

In an implementation method, before step 505, the PCF further sends a detection reporting condition to the detection network element via the SMF. The detection reporting condition indicates a condition for reporting a detection result. In this case, step 505 is specifically: The detection network element sends the second detection result to the SMF based on the detection reporting condition. For a specific implementation of the detection reporting condition, refer to related descriptions in the embodiment corresponding to FIG. 3.

In an implementation method, after step 506, the PCF determines that the second detection result meets a second trigger condition, and selects a second detection execution action corresponding to the second trigger condition. The PCF determines whether the second detection execution action is the same as the first detection execution action. When the second detection execution action is different from the first detection execution action, the PCF sends the second detection execution action to the detection network element via the SMF. In this way, the detection network element detects the QoS flow based on the second detection execution action and reports a corresponding detection result. For the implementation method, in a specific implementation, for example, an application scenario is as follows: At intervals of a piece of duration, the PCF selects a detection execution action once based on a trigger condition that a detection result meets, and sends the detection execution action to the detection network element via the SMF. The detection network element detects the QoS flow based on the detection execution action and reports a detection result within the period of time. The PCF determines, based on the detection result, whether the detection execution action needs to be updated. If the detection execution action needs to be updated, the PCF notifies the detection network element to update the detection execution action. Subsequently, within a next piece of duration, the PCF selects a detection execution action once based on a trigger condition that the detection result meets, and sends the detection execution action to the detection network element via the SMF, and so on.

In an implementation method, based on the embodiment corresponding to FIG. 3, FIG. 4, or FIG. 5, after receiving the second detection result, the SMF or the PCF may send the second detection result to the AF. The AF generates a detection policy based on the second detection result. The detection policy includes at least one of a detection execution rule, a detection reporting condition, or a detection indication. The detection execution rule includes at least one trigger condition and a detection execution action corresponding to the at least one trigger condition. The detection reporting condition indicates a condition for reporting a detection result. The detection indication indicates to enable the QoS flow detection function. It may be understood that the AF may generate the updated detection policy, and the detection policy may be sent to the detection network element via the PCF and the SMF, so that the detection network element may obtain the updated detection policy.

With reference to a specific example, the following describes the embodiment corresponding to FIG. 3, FIG. 4, or FIG. 5.

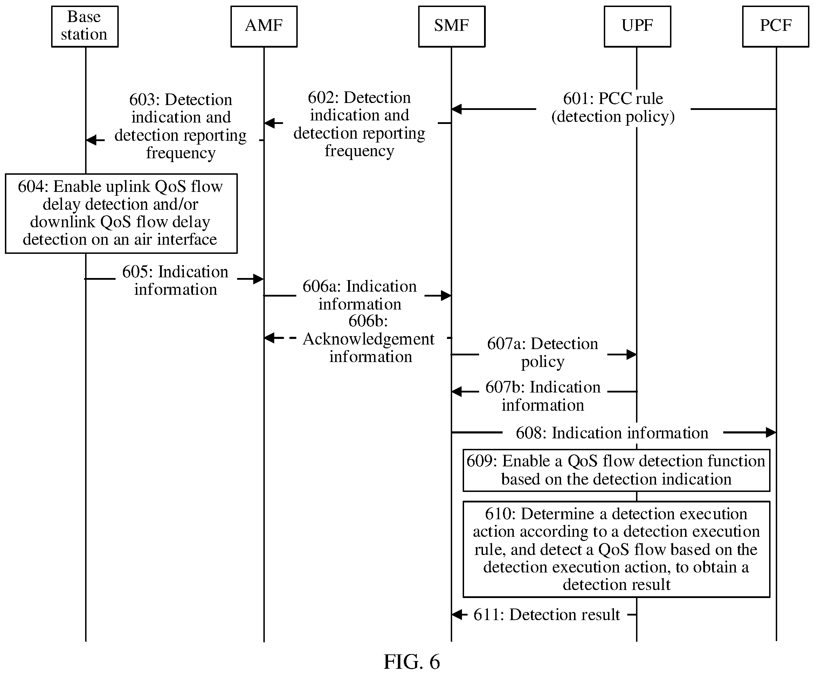

FIG. 6 is a schematic flowchart of a detection method according to an embodiment of this application. The foregoing detection network element is specifically a UPF in this embodiment.

The method includes the following steps.

Step 601: A PCF initiates a session management policy association modification (PCF initiated SM Policy Association Modification) procedure, and sends a policy and charging control (Policy and Charging Control, PCC) rule to an SMF in the procedure, where the PCC rule includes a detection policy.

The detection policy includes a detection execution rule, a detection reporting condition, and a detection indication. For meanings of the detection execution rule, the detection reporting condition, and the detection indication, refer to the descriptions in the embodiment corresponding to FIG. 3.

In an implementation method, when an AF requests the PCF to perform QoS detection on a specific service (for example, an ultra-reliable and low-latency communication (Ultra-Reliable and Low-Latency Communication, URLLC) service), the PCF is triggered to generate the detection policy for a QoS flow of the service, and performs step 601.

Step 602: The SMF sends the detection indication and a detection reporting frequency to an AMF. Correspondingly, the AMF receives the detection indication and a detection reporting frequency.

In an implementation method, the SMF obtains the detection indication and the detection reporting frequency from the detection policy from the PCF. The detection reporting frequency is included in the detection reporting condition. Then, the SMF sends the detection indication and the detection reporting frequency to the AMF.

In another implementation method, the SMF obtains the detection policy locally, and obtains the detection indication and the detection reporting frequency from the detection policy. The detection reporting frequency is included in the detection reporting condition in the detection policy. Then, the SMF sends the detection indication and the detection reporting frequency to the AMF. The detection policy locally stored by the SMF may be generated by the SMF, or may be locally stored by the SMF after being previously received from the PCF.

Optionally, step 602 may be: The SMF invokes a Namf_Communication_N1N2MessageTransfer message, where the message carries the detection indication and the detection reporting frequency.

Step 603: The AMF sends an N2 message to a base station. Correspondingly, the base station receives the N2 message.

The N2 message includes the detection indication and the detection reporting frequency.

Step 604: The base station enables uplink QoS flow delay detection and/or downlink QoS flow delay detection on an air interface based on the detection indication.

Further, the base station further determines an air interface delay detection frequency based on the detection reporting frequency.

Step 605: The base station sends the N2 message to the AMF. Correspondingly, the AMF receives the N2 message.

The N2 message includes indication information. The indication information indicates that the base station performs QoS detection or refuses to perform QoS detection.

For example, when a load of the base station is greater than a threshold, the base station may refuse to perform QoS detection based on the load.

Step 606a: The AMF sends the indication information to the SMF. Correspondingly, the SMF receives the indication information.

The indication information indicates that the base station performs QoS detection or refuses to perform QoS detection.

The indication information sent by the AMF to the SMF may be indication information received by the AMF from the base station, or may be indication information regenerated based on indication information received from the base station.

In an implementation method, the AMF invokes an Nsmf_PDUSession_UpdateSMContext Request message. The message includes the indication information.

Step 606b: The SMF sends acknowledgement information to the AMF. Correspondingly, the AMF receives the acknowledgement information.

This step is optional.

The acknowledgement information indicates that the SMF receives the indication information sent by the AMF.

In an implementation method, the AMF invokes an Nsmf_PDUSession_UpdateSMContext Request message. The message includes the acknowledgement information.

Step 607a: The SMF sends an N4 session modification request message to the UPF. Correspondingly, the UPF receives the N4 session modification request message.

The N4 session modification request message includes the detection policy.

In an implementation method, the N4 session modification request message is an N4 Session Modification Request message.

Step 607b: The UPF sends an N4 session modification response message to the SMF. Correspondingly, the SMF receives the N4 session modification response message.

The N4 session modification response message includes indication information. The indication information indicates that the UPF performs QoS detection or indicates that the UPF refuses to perform QoS detection.

In an implementation method, the N4 session modification response message is an N4 Session Modification Response message.

Step 608: The SMF initiates a session management policy association modification (SMF initiated SM Policy Association Modification) procedure, and sends indication information to the PCF in the procedure, where the indication information indicates whether the base station performs QoS detection and/or whether the UPF performs QoS detection.

Step 609: The UPF enables a QoS flow detection function based on the detection indication.

Step 610: The UPF determines a detection execution action based on the detection execution rule, and detects the QoS flow based on the detection execution action, to obtain a detection result.

The detection result may be the first detection result or the second detection result in the embodiment corresponding to FIG. 3.

The detection execution action determined by the UPF may be a default detection execution action in the detection execution rule, or another detection execution action. For a specific implementation method for determining the detection execution action by the UPF, refer to the descriptions in the embodiment corresponding to FIG. 3.

Step 611: The UPF reports the detection result to the SMF based on the detection reporting condition.

For a definition of the detection reporting condition, refer to the descriptions in the embodiment corresponding to FIG. 3.

In an implementation method, the UPF sends, to the SMF, an N4 Session Report, which includes the detection result.

Optionally, after receiving the detection result, the SMF may send the detection result to the AF or the PCF. The AF or the PCF may update an existing detection execution rule based on the detection result, to obtain an updated detection execution rule, and generate an updated detection policy based on the updated detection execution rule. The updated detection policy may be re-delivered to the UPF via the SMF.

According to this solution, the detection network element (namely, the UPF) can receive the detection policy from the SMF, determine the detection execution action based on the detection policy, detect the QoS flow based on the detection indication, the detection reporting condition, and the detection execution action, and report the detection result.

It should be noted that a sequence of performing step 609 and step 610 and a sequence of performing step 607b and step 608 are random.

In the embodiment corresponding to FIG. 6, the detection policy used by the UPF is received from the SMF. In another implementation method, the detection policy may be locally configured on the UPF via through a network management device, or some information in the detection policy is locally configured on the UPF through a network management device. Then, the UPF receives other information in the detection policy from the SMF or the PCF. For example, the detection execution rule is locally configured on the UPF, and then the UPF receives the detection indication and the detection reporting condition from the SMF or the PCF.

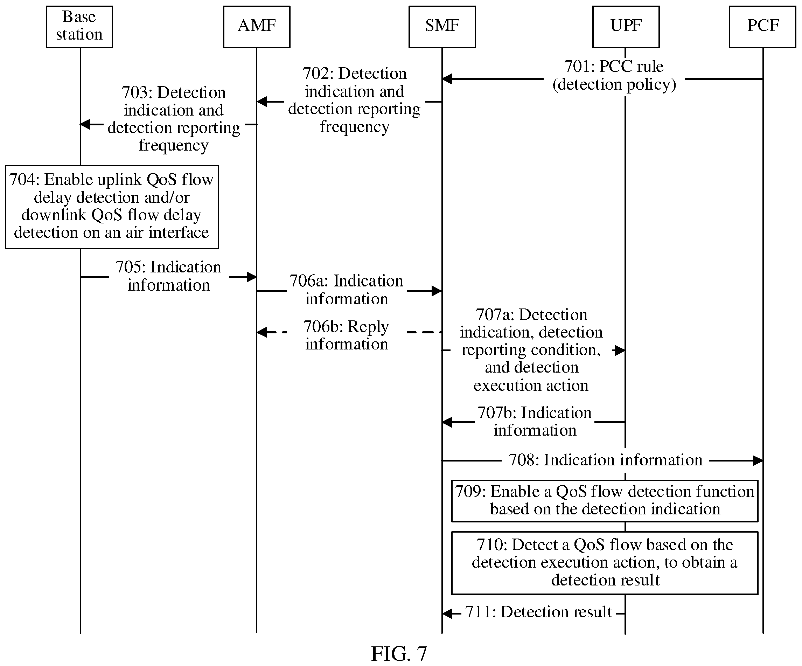

FIG. 7 is a schematic flowchart of a detection method according to an embodiment of this application. The foregoing detection network element is specifically a UPF in this embodiment.

The method includes the following steps.

Step 701 to step 705 are the same as step 601 to step 605.

Step 706a is the same as step 606a.

Step 706b is the same as step 606b.

Step 707a: The SMF sends an N4 session modification request message to the UPF. Correspondingly, the UPF receives the N4 session modification request message.

The N4 session modification request message includes a detection indication, a detection reporting condition, and a detection execution action.

The detection indication and the detection reporting condition are from a detection policy received by the SMF. The detection execution action is selected by the SMF from a detection execution rule. For a specific implementation method for selecting the detection execution action by the SMF, refer to the descriptions in the embodiment corresponding to FIG. 4. Details are not described again.

In an implementation method, the N4 session modification request message is an N4 Session Modification Request message.

Step 707b is the same as step 607b.

Step 708 is the same as step 608.

Step 709 is the same as step 609.

Step 710: The UPF detects the QoS flow based on the detection execution action, to obtain a detection result.

The detection result may be the first detection result or the second detection result in the embodiment corresponding to FIG. 4.

The detection execution action used by the UPF may be a default detection execution action or another detection execution action. The detection execution action used by the UPF is determined by the SMF and sent to the UPF.

Step 711 is the same as step 611.

Optionally, after receiving the detection result, the SMF determines a trigger condition that the detection result meets, and then determines a detection execution action corresponding to the trigger condition. If the detection execution action is different from a detection execution action sent to the UPF last time, the SMF may send the newly determined detection execution action to the UPF.

According to this solution, the detection network element (namely, the UPF) can receive the detection indication, the detection reporting condition, and the detection execution action from the SMF. The UPF detects the QoS flow based on the detection indication, the detection reporting condition, and the detection execution action, and reports the detection result.

It should be noted that a sequence of performing step 709 and step 710 and a sequence of performing step 707b and step 708 are random.

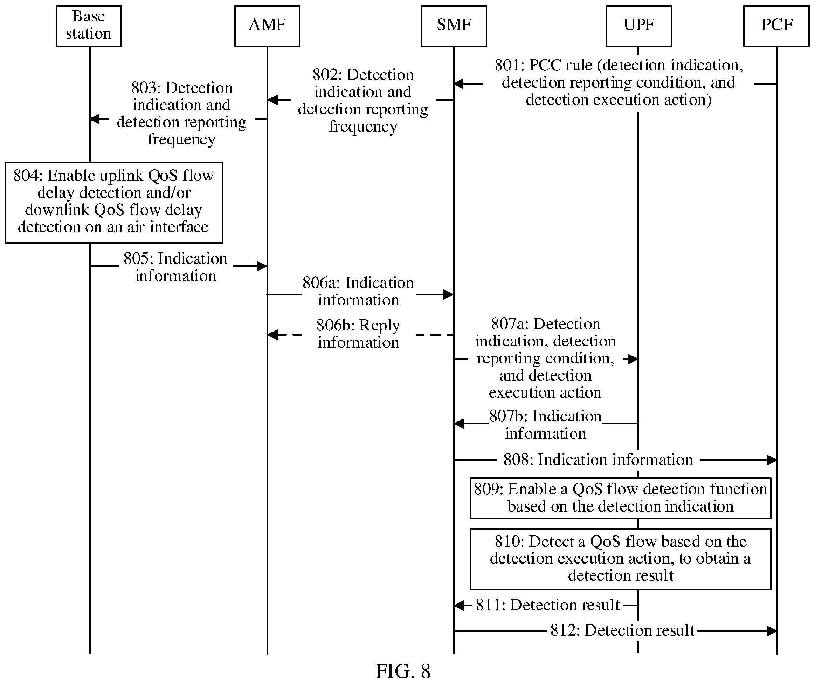

FIG. 8 is a schematic flowchart of a detection method according to an embodiment of this application. The foregoing detection network element is specifically a UPF in this embodiment.

The method includes the following steps.

Step 801: A PCF initiates a session management policy association modification (PCF initiated SM Policy Association Modification) procedure, and sends a PCC rule to an SMF in the procedure, where the PCC rule includes a detection indication, a detection reporting condition, and a detection execution action.

For meanings of the detection indication, the detection reporting condition, and the detection execution action, refer to the descriptions in the embodiment corresponding to FIG. 3.

The detection execution action may be a default detection execution action in a detection execution rule, or another detection execution action. For a specific implementation method for determining the detection execution action by the PCF, refer to the descriptions in the embodiment corresponding to FIG. 5.

In an implementation method, when an AF requests the PCF to perform QoS detection on a specific service (for example, a URLLC service), the PCF is triggered to generate a detection policy for a QoS flow of the service, and performs step 1001.

Step 802 to step 805 are the same as step 602 to step 605.

Step 806a is the same as step 606a.

Step 806b is the same as step 606b.

Step 807a: The SMF sends an N4 session modification request message to the UPF. Correspondingly, the UPF receives the N4 session modification request message.

The N4 session modification request message includes the detection indication, the detection reporting condition, and the detection execution action.

The detection indication, the detection reporting condition, and the detection execution action are from the PCF. The detection execution action is selected by the PCF from the detection execution rule. For a specific implementation method for selecting the detection execution action by the PCF, refer to the descriptions in the embodiment corresponding to FIG. 5. Details are not described again.

In an implementation method, the N4 session modification request message is an N4 Session Modification Request message.

Step 807b is the same as step 607b.

Step 808 is the same as step 608.

Step 809: The UPF enables a QoS flow detection function based on the detection indication.

Step 810: The UPF detects the QoS flow based on the detection execution action, to obtain a detection result.

The detection result may be the first detection result or the second detection result in the embodiment corresponding to FIG. 5.

The detection execution action used by the UPF may be the default detection execution action or the another detection execution action. The detection execution action used by the UPF is determined by the PCF and sent to the UPF via the SMF.

Step 811: The UPF reports the detection result to the SMF based on the detection reporting condition.

For a definition of the detection reporting condition, refer to the descriptions in the embodiment corresponding to FIG. 3.

In an implementation method, the UPF sends, to the SMF, an N4 Session Report, which includes the detection result.

Step 812: The SMF sends the detection result to the PCF. Correspondingly, the PCF receives the detection result.

Optionally, after receiving the detection result, the PCF determines a trigger condition that the detection result meets, and then determines a detection execution action corresponding to the trigger condition. If the detection execution action is different from a detection execution action sent to the UPF last time, the PCF may send the newly determined detection execution action to the UPF via the SMF.

According to this solution, the detection network element (namely, the UPF) can receive the detection indication, the detection reporting condition, and the detection execution action from the PCF. The UPF detects the QoS flow based on the detection indication, the detection reporting condition, and the detection execution action, and reports the detection result.

The following describes a specific example in which a detection network element detects a QoS flow and generates a detection result. In this example, the detection network element is specifically a UPF, the detection result includes a delay, and the delay is a delay between the UPF and a base station, or a delay between the UPF and a terminal.

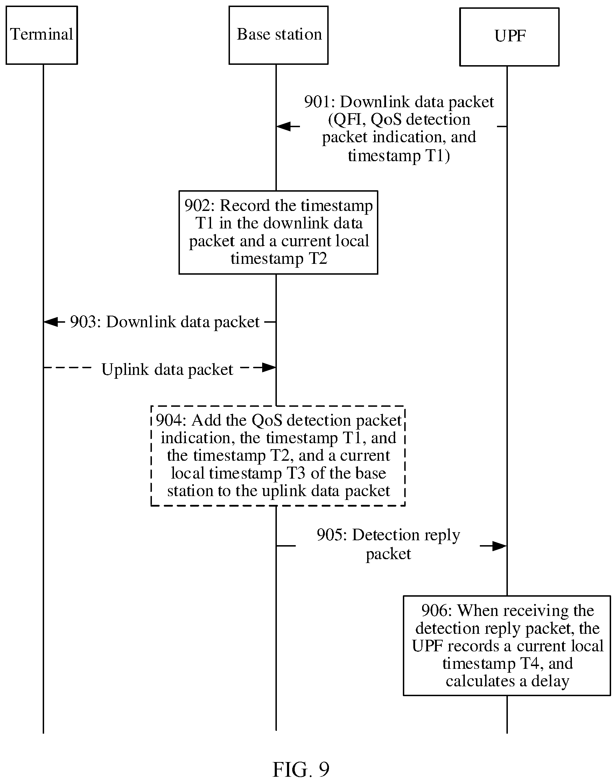

FIG. 9 is a schematic flowchart of a QoS flow detection method according to an embodiment of this application. The method includes the following steps.

Step 901: A UPF sends a downlink data packet to a base station, and correspondingly, the base station receives the downlink data packet.

The downlink data packet carries a QFI, a QoS detection packet indication, and a timestamp T1.

The QFI identifies a QoS flow. The QoS detection packet indication indicates that the downlink data packet is a data packet that is for detecting the QoS flow. The timestamp T1 is local time at which the UPF generates the downlink data packet.

In an implementation method, that the downlink data packet carries the QFI, the QoS detection packet indication, and the timestamp T1 may be specifically: The QFI, the QoS detection packet indication, and the timestamp T1 may be encapsulated into a GPRS tunneling protocol user plane (GRPS Tunneling Protocol User Plane, GTP-U) packet header of the downlink data packet. A GPRS is short for a general packet radio service (general packet radio service).

Step 902: When the base station receives the downlink data packet, the base station records the timestamp T1 in the downlink data packet and a current local timestamp T2. If the timestamp T1 is carried in the GTP-U packet header of the downlink data packet, the base station obtains the timestamp T1 from the GTP-U packet header of the downlink data packet.

Step 903: The base station sends the downlink data packet to a terminal, and correspondingly, the terminal receives the downlink data packet.

Step 904: When the base station receives, from the terminal, an uplink data packet that carries the QFI, the base station adds the QoS detection packet indication, the timestamp T1, and the timestamp T2, and a current local timestamp T3 of the base station to the uplink data packet, and optionally, further adds, to the uplink data packet, an uplink QoS flow delay and/or a downlink QoS flow delay of an air interface between the base station and the terminal.

In an implementation method, that the base station adds, to the uplink data packet, the QoS detection packet indication, the timestamp T1, the timestamp T2, and the current local timestamp T3 of the base station may be specifically: The base station adds the QoS detection packet indication, the timestamp T1, the timestamp T2, and the current local timestamp T3 of the base station to a GTP-U packet header of the uplink data packet. Optionally, the uplink QoS flow delay and/or the downlink QoS flow delay of the air interface between the base station and the terminal are/is further added to the GTP-U packet header. The uplink QoS flow delay and/or the downlink QoS flow delay of the air interface between the base station and the terminal start/starts to be detected after the base station receives a detection indication and a detection reporting frequency from an SMF or a PCF.

It should be noted that step 904 is an optional step. If the base station does not receive, from the terminal, the uplink data packet that carries the QFI, or the base station does not receive, from the terminal within specified duration, the uplink data packet that carries the QFI, the base station may generate a pseudo uplink data packet as a detection acknowledgement packet for the downlink data packet. The pseudo uplink data packet carries the QFI, the QoS detection packet indication, the timestamp T1, the timestamp T2, and the current local timestamp T3 of the base station. Optionally, the uplink QoS flow delay and/or the downlink QoS flow delay of the air interface between the base station and the terminal are/is further added to the pseudo uplink data packet. In an implementation method, that the pseudo uplink data packet carries the QFI, the QoS detection packet indication, the timestamp T1, the timestamp T2, and the current local timestamp T3 of the base station may be specifically: The QFI, the QoS detection packet indication, the timestamp T1, the timestamp T2, and the current local timestamp T3 of the base station are carried in a GTP-U packet header of the pseudo uplink data packet. Optionally, the GTP-U header further carries the uplink QoS flow delay and/or the downlink QoS flow delay of the air interface between the base station and the terminal.

Step 905: The base station sends the detection acknowledgement packet to the UPF. Correspondingly, the UPF receives the detection acknowledgement packet.

The detection acknowledgement packet is the uplink data packet or the pseudo uplink data packet in step 904. The detection acknowledgement packet carries the QFI, the QoS detection packet indication, the timestamp T1, the timestamp T2, and the current local timestamp T3 of the base station, and optionally, further carries the uplink QoS flow delay and/or the downlink QoS flow delay of the air interface between the base station and the terminal.

Step 906: When receiving the detection acknowledgement packet, the UPF records a current local timestamp T4, and calculates a delay.

In an implementation method, that the UPF calculates a delay between the UPF and the base station is specifically in the following two cases.

Case 1: Clocks of the base station and the UPF are asynchronous. In this case, the UPF calculates a round-trip delay between the UPF and the base station. The round-trip delay=T2-T1+T4-T3.

Case 2: Clocks of the base station and the UPF are synchronous. In this case, the UPF calculates a one-way delay between the UPF and the base station. A downlink delay from the UPF to the base station=T2-T1, and an uplink delay from the base station to the UPF=T4-T3.

In another implementation method, if the detection acknowledgement packet further carries the uplink QoS flow delay and/or the downlink QoS flow delay of the air interface between the base station and the terminal, the UPF may obtain a delay between the UPF and the terminal through calculation based on the delay between the UPF and the base station and the uplink QoS flow delay and/or the downlink QoS flow delay of the air interface between the base station and the terminal. For example, when the clocks of the base station and the UPF are asynchronous, the UPF calculates a round-trip delay between the UPF and the terminal. The round-trip delay=T2-T1+T4-T3+the uplink QoS flow delay of the air interface between the base station and the terminal+the downlink QoS flow delay of the air interface between the base station and the terminal. For another example, when the clocks of the base station and the UPF are synchronized, the UPF calculates a one-way delay between the UPF and the terminal. A downlink delay from the UPF to the terminal=T2-T1+the downlink QoS flow delay of the air interface between the base station and the terminal, and an uplink delay from the terminal to the UPF=T4-T3+the uplink QoS flow delay of the air interface between the base station and the terminal.

The UPF generates a detection result based on the delay obtained through calculation. For example, the UPF may use, as a part of the detection result, an average value of a plurality of delays determined within a period of time. Optionally, the detection result further includes a delay jitter and a QoS flow rate that are determined by the UPF. The UPF may report the detection result to the SMF based on a detection reporting condition.

According to the foregoing solution, the UPF can detect the QoS flow to obtain a detection result, and report the detection result.

It may be understood that, to implement functions in the foregoing embodiments, the detection network element or the network device includes a corresponding hardware structure and/or software module performing each function. A person skilled in the art should be easily aware that units and method steps in the examples described with reference to embodiments disclosed in this application can be implemented in a form of hardware or a combination of hardware and computer software in this application. Whether a function is performed in a form of hardware or hardware driven by computer software depends on particular application scenarios and design constraints of the technical solutions.

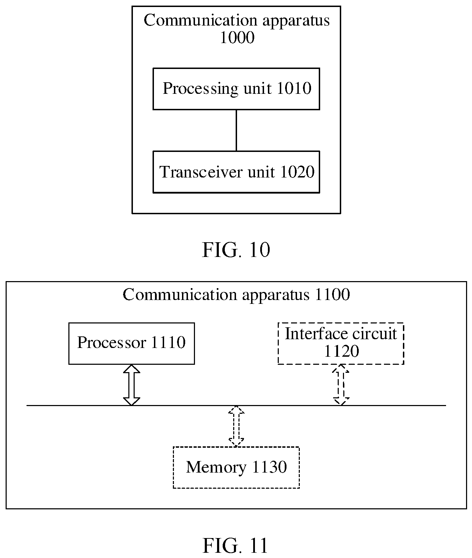

FIG. 10 and FIG. 11 are diagrams of structures of possible communication apparatuses according to embodiments of this application. These communication apparatuses may be configured to implement functions of the detection network element or the network device in the foregoing method embodiments, and therefore can also implement beneficial effects of the foregoing method embodiments. In embodiments of this application, the communication apparatus may be a detection network element or a network device, or may be a module (for example, a chip) used in a detection network element or a network device.

As shown in FIG. 10, a communication apparatus 1000 includes a processing unit 1010 and a transceiver unit 1020. The communication apparatus 1000 is configured to implement functions of the detection network element (for example, the UPF) or the network device (for example, the SMF or the PCF) in the method embodiments shown in FIG. 3 to FIG. 9.

When the communication apparatus 1000 is configured to implement functions of the detection network element in the method embodiment shown in FIG. 3, the processing unit 1010 is configured to: when a first detection result of a detected quality of service flow meets a first trigger condition, detect the quality of service flow based on a first detection execution action corresponding to the first trigger condition. The first detection execution action includes a detection frequency. The transceiver unit 1020 is configured to report a second detection result detected based on the first detection execution action.

In a possible implementation method, the processing unit 1010 is further configured to obtain, from a detection execution rule, the first detection execution action corresponding to the first trigger condition. The detection execution rule includes at least one trigger condition and a detection execution action corresponding to the at least one trigger condition. The at least one trigger condition includes the first trigger condition. The detection execution action corresponding to the at least one trigger condition includes the first detection execution action.

When the communication apparatus 1000 is configured to implement functions of the SMF in the method embodiment shown in FIG. 4 or functions of the PCF in the method embodiment shown in FIG. 5, the processing unit 1010 is configured to: when a first detection result of a quality of service flow meets a first trigger condition, select a first detection execution action corresponding to the first trigger condition. The first detection execution action includes a detection frequency. The transceiver unit 1020 is configured to send the first detection execution action.

In a possible implementation method, the processing unit 1010 is specifically configured to select, from a detection execution rule, the first detection execution action corresponding to the first trigger condition. The detection execution rule includes at least one trigger condition and a detection execution action corresponding to the at least one trigger condition. The at least one trigger condition includes the first trigger condition. The detection execution action corresponding to the at least one trigger condition includes the first detection execution action.

For more detailed descriptions of the processing unit 1010 and the transceiver unit 1020, directly refer to related descriptions in the method embodiments shown in FIG. 3 to FIG. 9. Details are not described herein again.

As shown in FIG. 11, a communication apparatus 1100 includes at least one processor 1110, and optionally, may further include an interface circuit 1120. The processor 1110 and the interface circuit 1120 are coupled to each other. It may be understood that the interface circuit 1120 may be a transceiver or an input/output interface. Optionally, the communication apparatus 1100 may further include a memory 1130, configured to store instructions to be executed by the processor 1110, input data required by the processor 1110 to run instructions, or data generated after the processor 1110 runs instructions.

When the communication apparatus 1100 is configured to implement the methods shown in FIG. 3 to FIG. 9, the processor 1110 is configured to implement functions of the foregoing processing unit 1010, and the interface circuit 1120 is configured to implement functions of the foregoing transceiver unit 1020.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

Method steps in embodiments of this application may be implemented by hardware, or may be implemented by a processor by executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a constituent part of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer program or the instruction is loaded and executed on a computer, the procedures or functions in embodiments of this application are all or partially performed. The computer may be a general-purpose computer, a dedicated computer, a computer network, a base station, user equipment, or another programmable apparatus. The computer program or the instruction may be stored in a computer-readable storage medium, or may be transmitted from a computer-readable storage medium to another computer-readable storage medium. For example, the computer program or instruction may be transmitted from a website, computer, server, or data center to another website, computer, server, or data center in a wired or wireless manner. The computer-readable storage medium may be any usable medium that can be accessed by a computer, or a data storage device like a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid state disk. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" indicates an "or" relationship between associated objects. In a formula in this application, the character "/" indicates a "division" relationship between associated objects.

It may be understood that various numbers in embodiments of this application are merely used for differentiation for ease of description, and are not used to limit the scope of embodiments of this application. Sequence numbers of the foregoing processes do not mean execution sequences, and the execution sequences of the processes should be determined based on functions and internal logic of the processes.

## Claims

1. A detection method, comprising:
when a first detection result of a detected quality of service flow meets a first trigger condition, detecting the quality of service flow based on a first detection execution action corresponding to the first trigger condition, wherein the first detection execution action comprises a detection frequency; and
reporting a second detection result detected based on the first detection execution action.

2. The method according to claim 1, wherein the method further comprises:
obtaining, from a detection execution rule, the first detection execution action corresponding to the first trigger condition, wherein
the detection execution rule comprises at least one trigger condition and a detection execution action corresponding to the at least one trigger condition, the at least one trigger condition comprises the first trigger condition, and the detection execution action corresponding to the at least one trigger condition comprises the first detection execution action.

3. The method according to claim 2, wherein the method further comprises:
selecting a default detection execution action in the detection execution rule when the first detection result does not meet any trigger condition in the at least one trigger condition; and
detecting the quality of service flow based on the default detection execution action.

4. The method according to claim 2 or 3, wherein the method further comprises:
receiving the detection execution rule from a session management network element or a policy control network element; or
obtaining the detection execution rule locally.

5. The method according to any one of claims 1 to 4, wherein that the first detection result meets the first trigger condition comprises at least one of the following:
a delay in the first detection result is comprised in a delay threshold interval in the first trigger condition;
a delay jitter in the first detection result is comprised in a delay jitter threshold interval in the first trigger condition; and
a quality of service flow rate in the first detection result is comprised in a quality of service flow rate threshold interval in the first trigger condition, wherein
the delay is a delay between a user plane network element and an access network device, a delay between a user plane network element and a terminal, or an air interface delay between an access network device and a terminal;
the delay jitter is a jitter value of the delay between the user plane network element and the access network device, a jitter value of the delay between the user plane network element and the terminal, or a jitter value of the air interface delay between the access network device and the terminal; and
the quality of service flow rate is a transmission rate of the quality of service flow.

6. The method according to any one of claims 1 to 4, wherein the reporting a second detection result detected based on the first detection execution action comprises:
reporting the second detection result when a detection reporting condition is met, wherein
that the detection reporting condition is met comprises at least one of the following:
a delay in the second detection result is greater than a delay threshold in the detection reporting condition;
a delay jitter in the second detection result is greater than a delay jitter threshold in the detection reporting condition; and
a quality of service flow rate in the second detection result is greater than a quality of service flow rate threshold in the detection reporting condition, wherein
the delay is a delay between a user plane network element and an access network device, a delay between a user plane network element and a terminal, or an air interface delay between an access network device and a terminal;
the delay jitter is a jitter value of the delay between the user plane network element and the access network device, a jitter value of the delay between the user plane network element and the terminal, or a jitter value of the air interface delay between the access network device and the terminal; and
the quality of service flow rate is a transmission rate of the quality of service flow.

7. The method according to claim 6, wherein the method further comprises:
receiving the detection reporting condition from the session management network element or the policy control network element; or
obtaining the detection reporting condition locally.

8. The method according to any one of claims 1 to 7, wherein the method further comprises:
enabling a quality of service flow detection function based on a detection indication.

9. The method according to claim 8, wherein the method further comprises:
receiving the detection indication from the session management network element or the policy control network element; or
obtaining the detection indication locally.

10. The method according to any one of claims 1 to 9, wherein the second detection result comprises at least one of the following:
the delay jitter, the quality of service flow rate, and information indicating the first detection execution action, wherein
the delay jitter is the jitter value of the delay between the user plane network element and the access network device, the jitter value of the delay between the user plane network element and the terminal, or the jitter value of the air interface delay between the access network device and the terminal; and
the quality of service flow rate is the transmission rate of the quality of service flow.

11. The method according to any one of claims 1 to 10, wherein the first detection execution action further comprises a detected data amount, and the detected data amount indicates a quantity of data packets detected at a time.

12. A communication apparatus, comprising a module configured to perform the method according to any one of claims 1 to 11.

13. A communication apparatus, comprising a processor coupled to a memory, wherein the processor is configured to invoke a program stored in the memory, to perform the method according to any one of claims 1 to 11.

14. A communication apparatus, comprising a processor and a memory, wherein the memory is configured to store computer instructions, and when the communication apparatus runs, the processor executes the computer instructions stored in the memory, to perform the method according to any one of claims 1 to 11.

15. A communication apparatus, comprising a processor and an interface circuit, wherein the processor is configured to: communicate with another apparatus through the interface circuit, and perform the method according to any one of claims 1 to 11.

16. A computer program product, wherein the computer program product comprises a computer program or instructions, and when the computer program or the instructions are run on a processor, the processor is enabled to perform the method according to any one of claims 1 to 11.

17. A computer-readable storage medium, wherein the storage medium stores a computer program or instructions, and when the computer program or the instructions are executed by a communication apparatus, the method according to any one of claims 1 to 11 is implemented.

18. A communication system, comprising:
a detection network element, configured to perform the method according to any one of claims 1 to 11; and
a network device, configured to receive a second detection result reported by the detection network element.

19. The system according to claim 18, wherein the system further comprises an application function network element;
the network device is further configured to send the second detection result to the application function network element; and
the application function network element is configured to generate a detection policy based on the second detection result, wherein the detection policy comprises at least one of a detection execution rule, a detection reporting condition, or a detection indication, the detection execution rule comprises at least one trigger condition and a detection execution action corresponding to the at least one trigger condition, the detection reporting condition indicates a condition for reporting a detection result, and the detection indication indicates to enable a quality of service flow detection function.

20. A detection method, comprising:
when a first detection result of a detected quality of service flow meets a first trigger condition, detecting, by a detection network element, the quality of service flow based on a first detection execution action corresponding to the first trigger condition, wherein the first detection execution action comprises a detection frequency; and reporting, to a network device, a second detection result detected based on the first detection execution action; and
receiving, by the network device, the second detection result reported by the detection network element.

21. The method according to claim 20, further comprising:
sending, by the network device, the second detection result to an application function network element; and
generating, by the application function network element, a detection policy based on the second detection result, wherein the detection policy comprises at least one of a detection execution rule, a detection reporting condition, or a detection indication, the detection execution rule comprises at least one trigger condition and a detection execution action corresponding to the at least one trigger condition, the detection reporting condition indicates a condition for reporting a detection result, and the detection indication indicates to enable a quality of service flow detection function.
